(19) Europäisches Patentamt
European Patent Office
Office européen des brevets

(11) **EP 2 259 076 B1**

(12) **EUROPÄISCHE PATENTSCHRIFT**

(45) Veröffentlichungstag und Bekanntmachung des Hinweises auf die Patenterteilung:
**24.12.2014 Patentblatt 2014/52**

(51) Int Cl.:
***G01P 5/26*** *(2006.01)*

(21) Anmeldenummer: **10162191.0**

(22) Anmeldetag: **06.05.2010**

(54) **Verfahren zur Ermittlung der Geschwindigkeit von in einer strömenden Lösung dispergierten Partikeln**

Method for determining the speed of particles dispersed in a flowing solution

Procédé de détermination de la vitesse de particules dispersées dans une solution s'écoulant

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **03.06.2009 DE 102009023679**

(43) Veröffentlichungstag der Anmeldung:
**08.12.2010 Patentblatt 2010/49**

(73) Patentinhaber:
• **Forschungszentrum Jülich GmbH**
**52425 Jülich (DE)**
• **Foundation of Research and Technology - Hella ( FORTH)**
**71110 Heraklion, Kreta (GR)**

(72) Erfinder:
• **Lang, Peter**
**52349 Düren (DE)**

• **Lopinet, Benoit**
**71110 Heraklion, Tzalikaki, Grazi (GR)**

(74) Vertreter: **Albrecht, Ralf et al**
**Paul & Albrecht**
**Patentanwaltssozietät**
**Hellersbergstrasse 18**
**41460 Neuss (DE)**

(56) Entgegenhaltungen:
**US-A1- 2003 059 150     US-A1- 2006 257 886**

• **HOLMQVIST P ET AL: "Anisotropy of Brownian motion caused only by hydrodynamic interaction with a wall" PHYSICAL REVIEW E - STATISTICAL, NONLINEAR, AND SOFT MATTER PHYSICS 2006 AMERICAN PHYSICAL SOCIETY US, Bd. 74, Nr. 2, 3. August 2006 (2006-08-03) , Seiten 021402-1-021402-5, XP002595982 DOI: DOI: 10.1103/PHYSREVE.74.021402**

**Beschreibung**

Die vorliegende Erfindung betrifft ein Verfahren zur Ermittlung der Geschwindigkeit von in einer strömenden Lösung dispergierten Partikeln in unmittelbarer Umgebung einer Festkörperwand.

Fluidströmungen in der Nähe von harten Oberflächen ziehen aufgrund ihrer Bedeutung auf verschiedensten Gebieten, wie beispielsweise Tribologie, Mikrofluidik, Rheologie weicher Materie oder sogar Biomedizin, immer größere Aufmerksamkeit auf sich, weshalb allgemein der Bedarf besteht, die Strömungen in der Nähe einer Oberfläche zu kontrollieren. Die Phänomenologie von Nahwandströmungen hat sich bislang noch nicht vollständig etabliert, nicht zuletzt aufgrund der großen Vielzahl von Fluiden und Oberflächen und deren möglichen Wechselwirkungen.

Es werden derzeit einige experimentelle Techniken eingesetzt, um Fluidgeschwindigkeiten und Geschwindigkeitsprofile in der Nähe von Oberflächen zu ermitteln, und zwar mit verschiedenen Auflösungen angefangen von makroskopischer Rheologie bis hin zur optischen Bestimmung einschließlich der Nahfeldrasterkraftmikroskopie.

Die optische Erfassung, die auf einer internen Totalreflektion und dem mit dieser einhergehenden evaneszenten Nahfeld basiert, ist die am häufigsten eingesetzte Technik, da sie eine gute mikroskopische Auflösung bietet. Die Datenaufnahme und Datenanalyse sind jedoch nicht immer so einfach, wie es wünschenswert wäre, selbst für relativ einfache Strömungen. Weiter ist aus dem Artikel "Anisotropy of Brownian motion cuased only by haydrodynamic interaction with a wall" von Peter Holmqvist et.al., Phys.Rev. E 74, 021402 (2006), ein Verfahren bekannt, bei dem die Brown'sche Bewegung, insbesodere die damit verbundenen Diffusionskonstanten, in der Nähe einer Wand durch Betrachtung der Intensitäts-Zeit-Autokorrelationsfunktion einer gestreuten evaneszenten Welle untersucht wird.

Ausgehend von diesem Stand der Technik ist es eine Aufgabe der vorliegenden Erfindung, ein Verfahren der eingangs genannten Art bereitzustellen, das eine einfache Messung einer Nahwandgeschwindigkeit mit einer Auflösung im Bereich von einigen zehn Nanometern ermöglicht und bei einer Vielzahl verschiedener Geometrien leicht implementierbar ist.

Zur Lösung dieser Aufgabe schafft die vorliegende Erfindung ein Verfahren der eingangs genannten Art, das dadurch gekennzeichnet ist, dass die Partikelgeschwindigkeit basierend auf der erfassten zeitlichen Autokorrelationsfunktion $g_m(t)$ der gestreuten Intensität einer sich in unmittelbarer Umgebung der Festkörperwand ausbreitenden evaneszenten Welle ermittelt wird.

Bei dem erfindungsgemäßen Verfahren handelt es sich um eine Weiterentwicklung der heterodynen dynamischen Lichtstreuung mit evaneszenter Beleuchtung auf strömende Proben. Dieses Verfahren kann vorteilhaft bei einer Vielzahl verschiedener Geometrien leicht implementiert werden. Die vorgeschlagene Technik ist einfach und kann als eine spezielle Oberflächenanwendung der dynamischen Lichtstreuung unter Scherung angesehen werden, die normalerweise dazu verwendet wird, den Effekt von Scherung auf verschiedene Flüssigkeiten zu untersuchen. Dabei kann eine Auflösung im Bereich von einigen zehn Nanometern problemlos erzielt werden.

Gemäß einer Ausführungsform des erfindungsgemäßen Verfahrens weist dieses die Schritte auf:

- Erzeugen einer sich in unmittelbarer Umgebung der Festkörperwand ausbreitenden evaneszenten Welle;

- Erfassen der zeitlichen Autokorrelationsfunktion $g_m(t)$ der gestreuen Intensität;

- Anpassen der zeitlichen Autokorrelationsfunktion $g_m(t)$ mit einer theoretischen zeitlichen Modellkorrelationsfunktion $g(t)$ zur Bestimmung von Relaxationsraten $\Gamma_1$, $\Gamma_2$;

- Auftragen der Relaxationsraten $\Gamma_1$, $\Gamma_2$ gegen die Eindringtiefe $1/\kappa$ zur Bestimmung der ortsaufgelösten Scherrate $\dot{\gamma}$; und

- Berechnen der ortsaufgelösten Partikelgeschwindigkeit aus $\dot{\gamma}$.

Die evaneszente Welle wird bevorzugt durch Totalreflektion eines die Grenzfläche zwischen der Festkörperwand und der Lösung gerichteten Lichtstrahls an der Grenzfläche erzeugt, wobei als Lichtquelle bevorzugt ein Laser verwendet wird.

Die theoretische zeitliche Modellkorrelationsfunktion $g(t)$ kann ausgedrückt werden als

$$g(t) = \frac{\int\limits_0^\infty c(z)\,\mathrm{exp}(-\kappa z)\,\mathrm{exp}\left(i\vec{q}\vec{v}(z)\right)dz}{\int\limits_0^\infty c(z)\exp(-\kappa z)dz}$$

wobei c die Konzentration der Partikel, $1/\kappa$ die Eindringtiefe, $\vec{q}$ den Streuvektor, $\vec{v}$ die Partikelgeschwindigkeit und z die Ortskoordinate repräsentiert.

Die erfasste zeitliche Autokorrelationsfunktion $g_m(t)$ kann ausgedrückt werden als

$$g_m(t) = (1-B)^2 |g(t)|^2 + 2B(1-B)\,\mathrm{Re}\left(g(t)\right)$$

wobei B mit der Amplitude der berechneten Korrelationsfunktion $A = g(0) - g(t\rightarrow\infty)$ durch die Beziehung $B = \sqrt{1-A}$ verknüpft ist.

Das Prinzip des erfindungsgemäßen Verfahrens ist gemäß einer Ausführungsform wie folgt:

Bei interner Totalreflektion dringt ein evaneszentes elektrisches Feld in das Medium mit niedrigerem Brechungsindex ein, wobei das Medium vorliegend der Lösung mit den dispergierten Partikeln entspricht. Dieses evaneszente Nahfeld kann in eine Fernfeldintensität gestreut werden, die einfach detektierbar ist, beispielsweise unter Verwendung eines die Anzahl der ankommenden Photonen erfassenden Sensors. Im Fall strömender Partikel beträgt die erfasste gestreute Intensität im Fernfeld eine Signatur der Geschwindigkeitsverteilung innerhalb des exponentiell abklingenden evaneszenten Feldes.

Ähnlich wie bei der Standard-Laser-Doppler-Velozimetrie kann die ortsaufgelöste Partikel geschwindigkeit ermittelt werden, wie es nachfolgend unter Bezugnahme auf ein Ausführungsbeispiel noch näher erläutert wird. Darüber hinaus lässt sich auch die Slip-Länge an der Festkörperwand erfassen.

Weitere Merkmale und Vorteile der vorliegenden Erfindung werden nachfolgend anhand der Beschreibung einer Ausführungsform des erfindungsgemäßen Verfahrens unter Bezugnahme auf die beiliegende Zeichnung beschrieben. Darin ist:

Figur 1     eine schematische Ansicht, die einen Versuchsaufbau zur Durchführung einer Ausführungsform des erfindungsgemäßen Verfahrens zeigt;

Figur 2     ein Diagramm, das die zeitliche Autokorrelationsfunktion $g_m(t)$ der gestreuten Intensität zeigt, und

Figur 3     ein Diagramm, das die gegen die Eindringtiefe $1/\kappa$ aufgetragenen Relaxationsraten $\Gamma_1$ und $\Gamma_2$ zeigt.

Das grundsätzliche Prinzip des erfindungsgemäßen Verfahrens ist wie folgt:

Bei interner Totalreflektion dringt ein evaneszentes elektrisches Feld in das Medium mit niedrigerem Brechungsindex ein, was durch die Gleichung $E(z) = E_0 \exp(-\kappa z)$ beschrieben wird. Die Eindringtiefe $1/\kappa$ ist gegeben als $\kappa = k_0 \sqrt{\sin^2 - \phi(n/n_s)^2}$, wobei $k_0$ der einfallende Wellenvektor im Vakuum ist, $\phi$ der Einfallswinkel ist und $n$ und $n_s$ die Brechungsindizes des Fluids und des harten Substrats sind. Dieses evaneszente Nahfeld kann in eine Fernfeldintensität gestreut werden, die einfach detektierbar ist. Im Fall strömender Partikel trägt die erfasste gestreute Intensität im Fernfeld eine Signatur der Geschwindigkeitsverteilung innerhalb des exponentiell abklingenden evaneszenten Feldes. Ähnlich wie bei der Standard-Laser-Doppler-Velozimetrie kann die Geschwindigkeit ermittelt werden. Im einfachen Fall einer ballistikartigen Strömungsbewegung, also wenn die Diffusionsbewegung vernachlässigt werden kann, kann die Korrelationsfunktion des gestreuten Feldes ausgedrückt werden als:

$$g(t) = \frac{\int\limits_{0}^{\infty} c(z)\,\mathrm{exp}(-\kappa z)\,\mathrm{exp}\left(i\vec{q}\vec{v}(z)\right)dz}{\int\limits_{0}^{\infty} c(z)\exp(-\kappa z)dz} \qquad (1)$$

Die lateralen Dimensionen des Streuvolumens wurden nicht berücksichtigt, da sie viel größer als die Eindrintiefe $1/\kappa$ des evaneszenten Feldes sind.

Bei rein heterodynen Detektionsbedingungen, wenn ein großer Teil der erfassten Intensität nicht zeitlich fluktuiert, wird der Realteil von g(t) gemessen. Bei rein homodyner Detektion wird das Betragsquadrat von g(t) erfasst. Im allgemeinsten Fall von teilweise heterodynen Bedingungen, unter denen die meisten der vorgestellten Daten erhalten wurden, wird die gemessene Intensitätsautokorrelationsfunktion $g_m(t)$ ausgedrückt durch die verallgemeinerte Siegert-Gleichung

$$g_m(t) = (1-B)^2 |g(t)|^2 + 2B(1-B)\,\mathrm{Re}\left(g(t)\right) \qquad (2)$$

, wobei B mit der Amplitude der berechneten Korrelationsfunktion $A = g(0) - g(t\rightarrow\infty)$ durch die Beziehung $B = \sqrt{1-A}$ verknüpft ist.

Mit der Annahme einer homogenen Verteilung der Partikel, d. h. $c(z)=0$ für $z < R$ und $c(z) = c_0$ für $z \geq R$, und einer Schergeschwindigkeit mit einer möglichen Slip-Länge b in der Nähe der Wand von $\vec{q}\vec{v}(z) = q_{\parallel}\dot{\gamma}(z+b)$ erhält man die Gleichungen

$$\mathrm{Re}\left(g(t)\right) = \frac{\cos\left(\Gamma_1 t\right) - \Gamma_2 t\sin\left(\Gamma_1 t\right)}{1 + \left(\Gamma_2 t\right)^2} \qquad (3)$$

und

$$|g(t)|^2 = \frac{1}{1 + \left(\Gamma_2 t\right)^2} \qquad (4)$$

wobei die Frequenzen $\Gamma_1$ und $\Gamma_2$ gegeben sind durch $\Gamma_1 = q_{\parallel}\dot{\gamma}(R+b)$ und $\Gamma_2 = \dfrac{q_{\parallel}\dot{\gamma}}{\kappa}$.

Homodyne Messungen sollten zu einem Lorentz-förmigen Abklingen der Korrelationsfunktion führen, wobei die Breite eine Durchschnittsgeschwindigkeit innerhalb des belichteten Volumens repräsentiert, in diesem Fall die Geschwindigkeit von Partikeln, die im Abstand $1/\kappa$ von der Wand vorhanden sind. Heterodyne und teilweise heterodyne Messungen liefern außerdem eine zweite Rate $\Gamma_1$, die mit der Nahwandgeschwindigkeit verknüpft ist. Dieser Parameter sollte als eine Frequenz in der Korrelationsfunktion beobachtet werden, wie bei der Standard-Laser-Doppler-Velozimetrie, weshalb sie relativ einfach erfasst werden können sollte.

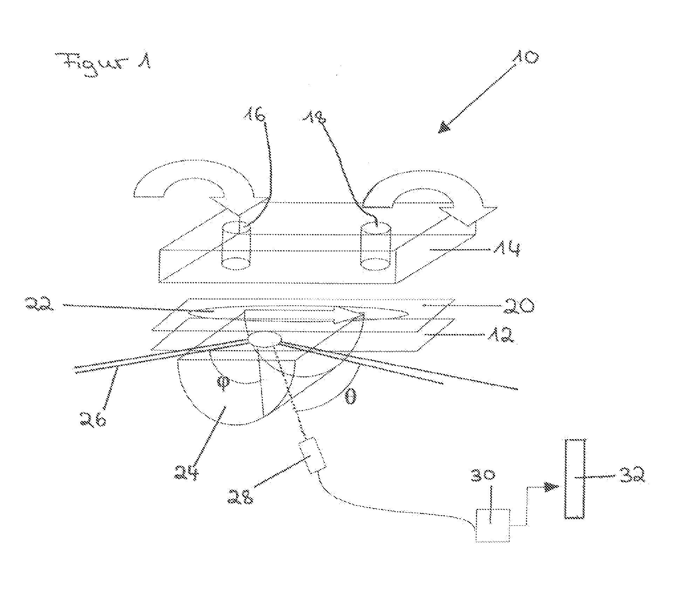

Der Nahfeld-Velozimetrieaufbau basiert auf einem bekannten Aufbau für Lichtstreumessungen mit evaneszenter Beleuchtung, der bereits beschrieben wurde. Es wurde, wie es in Figur 1 schematisch dargestellt ist, eine einfache Strömungszelle 10 gebaut, die aus einem 1 mm dicken Objektträger 12 (BK7 Fisher) und einem Plexiglasteil 14 mit einem Zulauf 16 und einem Ablauf 18 bestand, die durch ein 0,1 mm hohen Abstandhalter 20 aus doppelseitigem Klebeband mit einem 10 mm breiten Kanal 22 getrennt wurden. Diese Zelle wurde mit der flachen Oberfläche einer halbzylindrischen BK7-Linse 24 mit einem Radius von 15 mm und einer Dicke von 14 mm (Hellma) mit einem Tropfen eines Immersionsöls (Zeiss) verbunden. Die Durchflussrate wurde mit Hilfe einer nicht dargestellten Spritzenpumpe mit einstellbarer Geschwindigkeit erzeugt, wodurch eine Poiseuille-Strömung in dem $0.1x10$ mm²-Querschnitt der Strömungszelle 10 erzeugt wurde. Ein ebenfalls nicht dargestellter 150 mW Nd YAG CW Laser wurde als Lichtquelle verwendet. Der Strahl wurde mit Hilfe einer 20 cm-Linse fokussiert, die in einem Abstand von 2f positioniert wurde. Die Strömungszelle 10 wurde in der Mitte eines nicht gezeigten Dreiachsgoniometers platziert, das als ein Theta-2Theta-Goniometer eingesetzt wurde, wodurch eine unabhängige Einstellung des Einfallwinkels $\varphi$ und des Streuwinkels $\theta$ ermöglicht wurde. Der einfallende Laserstrahl wurde an der Glas-Fluid-Grenzfläche bei einem Einfallwinkel $\varphi > \varphi_c$ vollständig reflektiert (bitte $\varphi$, $\varphi_c$ *und* $\theta$ *in Figur 1 einsetzen*). Die Detektion des gestreuten Lichts erfolgte bei einem Winkel $\theta$ unter Verwendung einer Monomodefaser, die mit einem Kollimator (Oz optics) ausgestattet war, und an eine Avalange Photo Diode (APD)(Perkin Elmer) angeschlossen war. Die APD wurde im Einzelphotonendetektionsmodus betrieben, und ihr Ausgangssignal wurde mit einem digitalen Korrelator mit variabler Verzögerungszeit (ALV 6000/E) autokorreliert.

Das Vorhandensein statischer Streuung, die höchstwahrscheinlich von der Glasoberfläche und von adsorbierten Partikeln stammte, schaffte teilweise heterodyne Bedingungen. Die Proben bestanden aus monodispersen Polystyren-Latexkugeln, die in einer viskosen Glycerol-Wassermischung dispergiert waren, um die Diffusion zu verlangsamen.

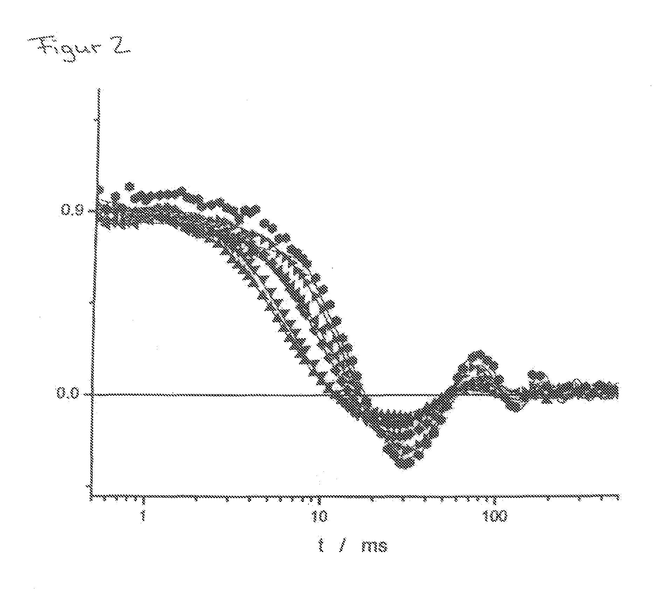

Ergebnisse: typische experimentell erfasste zeitliche Korrelationsfunktionen $g_m(t)$, von 170 nm Latexkugeln bei einer Strömungsgeschwindigkeit von xx ml/Stunde sind in Figur 2 gezeigt. Die Punkte entsprechen der Korrelation, die bei verschiedenen Eindringtiefen $1/\kappa$ gemessen wurden. Die durchgezogenen Linien sind Anpassungen durch die theoretischen Gleichungen (2), (3) und (4) mit $\Gamma_1$ und $\Gamma_2$ als anpassbaren Parametern. Offensichtlich ergibt die funktionale Form der theoretischen Gleichung eine sehr gute Anpassung.

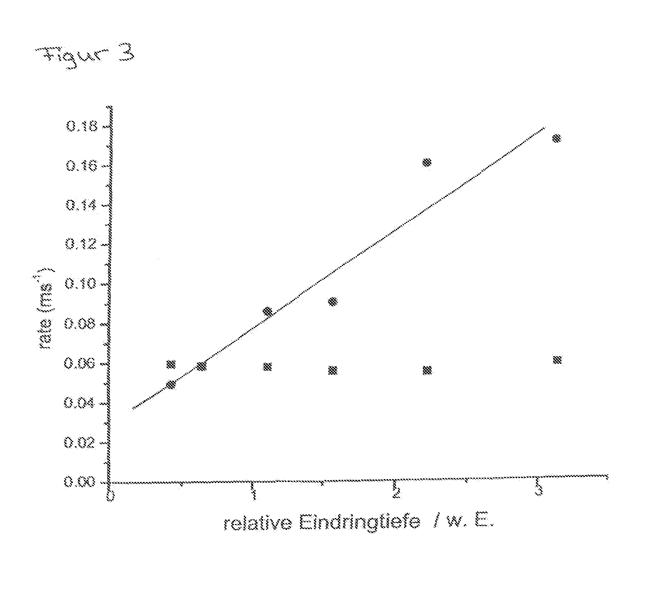

Die ausgewählten Parameter $\Gamma_1$ und $\Gamma_2$ sind in Figur 3 als Funktion der Eindringtiefe $1/\kappa$ dargestellt. Wie erwartet zeigt $\Gamma_2$ eine lineare Abhängigkeit von der Eindringtiefe, und $\Gamma_1$ ist unabhängig von $1/\kappa$. Es sei auf das Auftreten eines oszillierenden Teils in der Korrelationsfunktion, der nicht von der Eindringtiefe abhängig ist, hingewiesen, wie es aufgrund des hergeleiteten theoretischen Ausdrucks für g(t) zu erwarten war.

Tatsächlich kann $\Gamma_1$ einfach aus der gemessenen Korrelationsfunktion bestimmt werden, weil die Partikelgeschwindigkeit die Ursache für die deutlich erkennbaren Schwingungen in den gemessenen Korrelationsfunktionen ist (Figur 2). Wäre die Geschwindigkeit Null, würden keine Schwingungen erwartet. Es wurde festgestellt, dass die theoretische Modellgleichung die experimentell gemessenen Korrelationsfunktionen sehr gut beschreibt. Selbst bei Kontakt der Kugel mit der Wand ist die Geschwindigkeit ungleich Null. Im Falle eines Stroms einer Newton'schen Flüssigkeit in der Nähe einer glatten festen Oberfläche theoretische Modellgleichung die experimentell gemessenen Korrelationsfunktionen sehr gut beschreibt. Selbst bei Kontakt der Kugel mit der Wand ist die Geschwindigkeit ungleich Null. Im Falle eines Stroms einer Newton'schen Flüssigkeit in der Nähe einer glatten festen Oberfläche wird erwartet, dass die Geschwindigkeit eines kugelförmigen Partikels mit einem Radius R etwa der Hälfte der Geschwindigkeit des suspendierenden Fluids im Abstand R von der Wand ist. Um genau die Slip-Längen bestimmen zu können, bedarf es kleinstmöglicher Partikel. Streuexperimente können bis herunter zu Radien von weniger als 5 nm zuverlässig durchgeführt werden. Dies sollte eine Bestimmung der Slip-Länge bis auf wenige Nanometer ermöglichen.

Die Arbeiten, die zu dieser Erfindung geführt haben, wurden gemäß der Finanzhilfevereinbarung Nr. 213948 im Zuge des Siebten Rahmenprogramms der Europäischen Gemeinschaft (RP7/2007-2013) gefördert.

**Patentansprüche**

1. Verfahren zur Ermittlung der Geschwindigkeit von in einer strömenden Lösung dispergierten Partikeln in unmittelbarer Umgebung einer Festkörperwand, **dadurch gekennzeichnet, dass** die Partikelgeschwindigkeit basierend auf der erfassten zeitlichen Autokorrelationsfunktion $g_m(t)$ der gestreuten Intensität einer sich in unmittelbarer Umgebung der Festkörperwand ausbreitenden evaneszenten Welle ermittelt wird.

2. Verfahren nach Anspruch 1, **dadurch gekennzeichnet, dass** dieses die Schritte aufweist:

   - Erzeugen einer sich in unmittelbarer Umgebung der Festkörperwand ausbreitenden evaneszenten Welle;
   - Erfassen der zeitlichen Autokorrelationsfunktion $g_m(t)$ der gestreuten Intensität;
   - Anpassen der zeitlichen Autokorrelationsfunktion $g_m(t)$ mit einer theoretischen zeitlichen Modellkorrelationsfunktion g(t) zur Bestimmung von Relaxationsraten $\Gamma_1$, $\Gamma_2$;
   - Auftragen der Relaxationsraten $\Gamma_1$, $\Gamma_2$ gegen die Eindringtiefe $1/\kappa$ zur Bestimmung der ortsaufgelösten Scherrate $\dot{\gamma}$; und

- Berechnen der ortsaufgelösten Partikelgeschwindigkeit aus $\dot{\gamma}$.

3. Verfahren nach Anspruch 1 oder 2, **dadurch gekennzeichnet, dass** die evaneszente Welle durch die Totalreflektion eines auf die Grenzfläche zwischen der Festkörperwand und der Lösung gerichteten Lichtstrahls an der Grenzfläche erzeugt wird.

4. Verfahren nach einem der vorhergehenden Ansprüche, **dadurch gekennzeichnet, dass** die theoretische zeitliche Modellkorrelationsfunktion g(t) ausgedrückt wird als

$$g(t) = \frac{\int\limits_{0}^{\infty} c(z)\exp(-\kappa z)\exp\left(i q \vec{v}(z)\right) dz}{\int\limits_{0}^{\infty} c(z)\exp(-\kappa z) dz}$$

wobei c die Konzentration der Partikel, $1/\kappa$ die Eindringtiefe, $\vec{q}$ den Streuvektor, $\vec{v}$ die Partikelgeschwindigkeit und z die Ortskoordinate repräsentiert.

5. Verfahren nach einem der vorhergehenden Ansprüche, **dadurch gekennzeichnet, dass** die erfasste zeitliche Autokorrelationsfunktion $g_m(t)$ ausgedrückt wird als

$$g_m(t) = (1-B)^2 |g(t)|^2 + 2B(1-B)\operatorname{Re}(g(t))$$

wobei B mit der Amplitude der berechneten Korrelationsfunktion $A = g(0) - g(t \rightarrow \infty)$ durch die Beziehung $B = \sqrt{1-A}$ verknüpft ist.

## Claims

1. A method for determining the speed of particles dispersed in a flowing solution in the immediate vicinity of a wall of a solid, **characterised in that** the particle speed is determined on the basis of the recorded temporal autocorrelation function $g_m(t)$ of the scattered intensity of an evanescent wave propagating in the immediate vicinity of the wall of the solid.

2. The method according to Claim 1, **characterised in that** the latter comprises the steps:

   - generating an evanescent wave propagating in the immediate vicinity of the wall of the solid;
   - recording the temporal autocorrelation function $g_m(t)$ of the scattered intensity;
   - adapting the temporal autocorrelation function $g_m(t)$ to a theoretical temporal model correlation function g(t) to determine relaxation rates $\Gamma_1$, $\Gamma_2$;
   - applying the relaxation rates $\Gamma_1$, $\Gamma_2$ against the penetration depth $1/\kappa$ to determine the spatially resolved shear rate y; and
   - calculating the spatially resolved particle speed from y.

3. The method according to Claim 1 or 2, **characterised in that** the evanescent wave is generated by the total reflection of a light beam on the boundary surface directed at the boundary surface between the wall of the solid and the solution.

4. The method according to any of the preceding claims, **characterised in that** the theoretical temporal model correction function g(t) is expressed as

$$g(t) = \frac{\int_0^\infty c(z)\,exp(-\kappa z)\,exp\left(i\vec{q}\vec{v}(z)\right)dz}{\int_0^\infty c(z)\exp(-\kappa z)dz}$$

c representing the particle concentration, $1/\kappa$ the penetration depth, $\vec{q}$ the scatter vector, $\vec{v}$ the particle speed and z the spatial coordinate.

5. The method according to any of the preceding claims, **characterised in that** the recorded temporal autocorrelation function $g_m(t)$ is expressed as

$$g_m(t) = (1-B)^2 |g(t)|^2 + 2B(1-B)\mathrm{Re}\left(g(t)\right)$$

B being linked to the amplitude of the calculated correlation function $A = g(0) - g\ (t \rightarrow \infty)$ by the relationship

$$B = \sqrt{1-A}$$

**Revendications**

1. Procédé de calcul de la vitesse de particules dispersées dans une solution en circulation à proximité directe d'une paroi solide, **caractérisé en ce que** la vitesse de la particule est calculée sur la base de la fonction d'autocorrélation temporelle saisie $g_m(t)$ de l'intensité diffusée d'une onde évanescente se propageant directement à proximité de la paroi solide.

2. Procédé selon la revendication 1, **caractérisé en ce que** sont comprises les étapes suivantes :

 - Production d'une onde évanescente se propageant directement à proximité de la paroi solide ;
 - Saisie de la fonction d'autocorrélation temporelle $g_m(t)$ de l'intensité diffusée ;
 - Ajustement de la fonction d'autocorrélation temporelle $g_m(t)$ avec une fonction de corrélation modèle temporelle théorique g(t) pour la détermination de taux de relaxation $\Gamma_1$ et $\Gamma_2$ ;
 - Application des taux de relaxation $\Gamma_1$ et $\Gamma_2$ contre les profondeurs de pénétration $1/\kappa$ pour la détermination des taux de cisaillement à résolution locale $\dot{\gamma}$.
 - Calcul de la vitesse des particules à résolution locale à partir de $\dot{\gamma}$.

3. Procédé selon les revendications 1 ou 2, **caractérisé en ce que** l'onde évanescente est produite par la réflexion totale sur la surface de séparation d'un faisceau de lumière dirigé vers la surface de séparation entre la paroi solide et la solution.

4. Procédé selon l'une des revendications précédentes, **caractérisé en ce que** la fonction de corrélation modèle temporelle g(t) est exprimée par la formule

$$g(t) = \frac{\int_0^\infty c(z)\,exp(-\kappa z)\,exp\left(i\vec{q}\vec{v}(z)\right)dz}{\int_0^\infty c(z)\exp(-\kappa z)dz}$$

où c représente la concentration de la particule, $1/\kappa$ la profondeur de pénétration, $\vec{q}$ le vecteur de diffusion, $\vec{v}$ la vitesse de particule et z les coordonnées géométriques.

5. Procédé selon l'une des revendications précédentes, **caractérisé en ce que** la fonction d'autocorrélation temporelle saisie est exprimée par la formule

$$g_{\dot{m}}(t) = (1 - B)^2 |g(t)|^2 + 2B(1 - B)\mathrm{Re}(g(t))$$

où B est associé à l'amplitude de la fonction de corrélation calculée $A = g(0) - g(t \to \infty)$ via la relation $B = \sqrt{1 - A}$.

Figur 1

Figur 2

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **PETER HOLMQVIST.** Anisotropy of Brownian motion cuased only by haydrodynamic interaction with a wall. *Phys.Rev. E,* 2006, vol. 74, 021402